# EUROPÄISCHE PATENTSCHRIFT

(11) **EP 4 259 349 B1**
(45) Veröffentlichungstag und Bekanntmachung des Hinweises auf die Patenterteilung: **08.01.2025**
(21) Anmeldenummer: 21801046.0
(22) Anmeldetag: 22.10.2021
(51) Int. Cl.: B08B 3/02, F16F 15/08, F04D 29/66

(54) **HOCHDRUCKREINIGUNGSGERÄT**
HIGH-PRESSURE CLEANING DEVICE
APPAREIL DE NETTOYAGE À HAUTE PRESSION

(30) Priorität: 11.12.2020 DE 102020133163
(43) Veröffentlichungstag der Anmeldung: 18.10.2023
(73) Patentinhaber: Alfred Kärcher SE & Co. KG, 71364 Winnenden (DE)
(72) Erfinder: ERDMANN, Jürgen, 71364 Winnenden (DE); BAREITER, Rudi, 71364 Winnenden (DE); MÜLLER, Wolfgang, 71364 Winnenden (DE); KÖSSLER, Andreas, 71364 Winnenden (DE)
(74) Vertreter: Hoeger, Stellrecht & Partner Patentanwälte mbB
(86) Internationale Anmeldenummer: PCT/EP2021/079353
(87) Internationale Veröffentlichungsnummer: WO 2022/122236

(56) Entgegenhaltungen:
- EP-B1- 2 866 952
- WO-A1-2010/054701
- WO-A1-2018/184700
- WO-A1-2019/181705
- DE-A1- 102014 208 395

## Beschreibung

Die Erfindung betrifft ein Hochdruckreinigungsgerät mit einem Gerätegehäuse, das eine Motorpumpeneinheit mit einem Motor und einer von diesem angetriebenen Pumpe umgibt, wobei die Motorpumpeneinheit über schwingungsdämpfende Pufferelemente am Gerätegehäuse gehalten ist.

Derartige Hochdruckreinigungsgeräte kommen beispielsweise zur Reinigung von Oberflächen zum Einsatz, indem eine unter Druck stehende Reinigungsflüssigkeit, bevorzugt Wasser, auf die Oberfläche gerichtet wird. Die Reinigungsflüssigkeit wird von einer Pumpe unter Druck gesetzt, die von einem Motor angetrieben wird.

Als Motor kommt häufig ein Elektromotor zum Einsatz. Hierbei kann vorgesehen sein, dass der Elektromotor von der unter Druck zu setzenden Reinigungsflüssigkeit gekühlt wird, die zu diesem Zweck zunächst einem Kühlkanal zugeführt wird, der den Motor in Umfangsrichtung umgibt, und die anschließend einem Pumpeneinlass zugeführt wird, so dass die Reinigungsflüssigkeit von der Pumpe unter Druck gesetzt und anschließend über einen Pumpenauslass abgegeben werden kann. An den Pumpenauslass kann beispielsweise ein Hochdruckschlauch angeschlossen werden, an dessen freiem Ende zum Beispiel eine Sprühlanze angeordnet ist.

Der Motor, die Pumpe und ein zwischen dem Motor und der Pumpe angeordnetes Getriebe bilden häufig gemeinsam eine Baueinheit aus, die im Folgenden als Motorpumpeneinheit bezeichnet wird. Sie kann bei der Herstellung des Hochdruckreinigungsgeräts vormontiert und dann in ein Gerätegehäuse eingesetzt werden.

Der Betrieb derartiger Hochdruckreinigungsgeräte ist mit einer Geräuschentwicklung verbunden. In der WO 2010/054701 A1 wird vorgeschlagen, die Motorpumpeneinheit über schwingungsdämpfende Pufferelemente am Gerätegehäuse zu lagern. Dadurch kann eine starre Verbindung der Motorpumpeneinheit mit dem Gehäuse vermieden werden, so dass die Übertragung von Schwingungen der Motorpumpeneinheit auf das Gerätegehäuse vermindert wird. Der Einsatz der schwingungsdämpfenden Pufferelemente führt allerdings häufig zu einer erschwerten Montage des Hochdruckreinigungsgeräts, insbesondere wird durch die schwingungsdämpfenden Pufferelemente in vielen Fällen das Einsetzen der Motorpumpeneinheit in das Gerätegehäuse erschwert.

Aufgabe der vorliegenden Erfindung ist es daher, ein Hochdruckreinigungsgerät der eingangs genannten Art derart weiterzubilden, dass es einfacher zu montieren ist und dennoch eine geringe Geräuschentwicklung aufweist.

Diese Aufgabe wird bei einem Hochdruckreinigungsgerät der gattungsgemäßen Art erfindungsgemäß dadurch gelöst, dass das Hochdruckreinigungsgerät eine erste und eine zweite Halteeinrichtung aufweist, die am Gerätegehäuse festgelegt sind, wobei die erste Halteeinrichtung mindestens eine erste taschenförmige Aufnahme aufweist, die unter Zwischenlage eines ersten schwingungsdämpfenden Pufferelements in axialer Richtung fluchtend zu einer an der Motorpumpeneinheit positionierten zweiten taschenförmigen Aufnahme angeordnet ist, wobei das erste schwingungsdämpfende Puffelement zwei einander axial gegenüberliegende Endabschnitte aufweist, die jeweils von einer der ersten und zweiten taschenförmigen Aufnahmen aufgenommen werden, und wobei das erste schwingungsdämpfende Pufferelement mittels der ersten und zweiten taschenförmigen Aufnahmen in axialer Richtung und in radialer Richtung festgelegt ist, und wobei die zweite Halteeinrichtung mindestens eine dritte taschenförmige Aufnahme aufweist, die unter Zwischenlage eines zweiten schwingungsdämpfenden Pufferelements in axialer Richtung fluchtend zu einer an der Motorpumpeneinheit positionierten vierten taschenförmigen Aufnahme angeordnet ist, wobei das zweite schwingungsdämpfende Pufferelement zwei einander axial gegenüberliegende Endabschnitte aufweist, die jeweils von einer der dritten und vierten Aufnahmen aufgenommen werden, und wobei das zweite Pufferelement mittels der dritten und vierten Aufnahmen in axialer Richtung und in radialer Richtung festgelegt ist.

Beim erfindungsgemäßen Hochdruckreinigungsgerät erfolgt die Lagerung der Motorpumpeneinheit über erste und zweite schwingungsdämpfende Pufferelemente und eine erste und eine zweite Halteeinrichtung, die am Gerätegehäuse festgelegt sind. An der ersten Halteeinrichtung sind erste taschenförmige Aufnahmen angeordnet, in die mindestens ein erstes schwingungsdämpfendes Pufferelement mit einem axialen Endabschnitt eintaucht. Ein dem ersten axialen Endabschnitt axial gegenüberliegender zweiter axialer Endabschnitt des mindestens einen ersten Pufferelements taucht in eine zweite taschenförmige Aufnahme ein, die an der Motorpumpeneinheit angeordnet und in axialer Richtung fluchtend zur ersten taschenförmigen Aufnahme der ersten Halteeinrichtung ausgerichtet ist.

In entsprechender Weise ist an der zweiten Halteeinrichtung mindestens eine dritte taschenförmige Aufnahme angeordnet, die in axialer Richtung fluchtend zu einer an der Motorpumpeneinheit angeordneten vierten taschenförmigen Aufnahme ausgerichtet ist. Die dritten und vierten Aufnahmen nehmen einander axial gegenüberliegende Endabschnitte eines zweiten schwingungsdämpfenden Pufferelements auf.

Das mindestens eine erste Pufferelement wird mittels einer ersten und einer zweiten taschenförmigen Aufnahme in axialer Richtung und in radialer Richtung festgelegt, und das mindestens eine zweite schwingungsdämpfende Pufferelement wird mittels einer dritten und einer vierten Aufnahme in axialer Richtung und in radialer Richtung festgelegt.

Das erfindungsgemäße Hochdruckreinigungsgerät weist somit paarweise in axialer Richtung fluchtend zueinander ausgerichtete taschenförmige Aufnahmen auf, zwischen denen jeweils ein schwingungsdämpfendes Pufferelement angeordnet ist, dessen axial einander gegenüberliegende Endabschnitte jeweils von einer taschenförmigen Aufnahme aufgenommen werden, so dass die Pufferelemente sowohl in axialer Richtung als auch in radialer Richtung festgelegt sind.

Die axiale Ausrichtung der taschenförmigen Aufnahmen, in die die schwingungsdämpfenden Pufferelemente eintauchen, ermöglicht eine einfachere Montage des Hochdruckreinigungsgeräts, insbesondere wird das Einsetzen der Motorpumpeneinheit in das Gerätegehäuse erleichtert. Darüber hinaus hat es sich gezeigt, dass durch den Einsatz paarweise in axialer Richtung fluchtend zueinander ausgerichteter taschenförmiger Aufnahmen die Übertragung sowohl von axialen als auch von radialen Schwingungen von der Motorpumpeneinheit auf das Gerätegehäuse besonders wirkungsvoll reduziert werden können. Das erfindungsgemäße Hochdruckreinigungsgerät weist deshalb eine sehr geringe Geräuschentwicklung auf.

Bevorzugt sind die erste und zweite Halteeinrichtung bezogen auf die Längsachse der Motorpumpeneinheit in einem axialen Abstand zueinander angeordnet. Dadurch kann eine besonders stabile Lagerung der Motorpumpeneinheit im Gerätegehäuse erzielt werden.

Günstig ist es, wenn die erste Halteeinrichtung mehrere erste taschenförmige Aufnahmen aufweist, die jeweils unter Zwischenlage eines ersten schwingungsdämpfenden Pufferelements in axialer Richtung fluchtend zu einer an der Motorpumpeneinheit positionierten zweiten taschenförmigen Aufnahme angeordnet sind, wobei jedes erste Pufferelement zwei einander axial gegenüberliegende Endabschnitte aufweist, die jeweils von einem der ersten und zweiten Aufnahmen aufgenommen werden. Bei einer derartigen Ausgestaltung des erfindungsgemäßen Hochdruckreinigungsgeräts kommen mehrere erste schwingungsdämpfende Pufferelemente zum Einsatz, über die die Motorpumpeneinheit mittels paarweise in axialer Richtung fluchtend zueinander angeordneter taschenförmiger Aufnahmen mechanisch mit der ersten Halteeinrichtung verbunden sind. Mittels einer ersten Aufnahme, die an der ersten Halteeinrichtung angeordnet ist, und einer zweiten Aufnahme, die an der Motorpumpeneinheit angeordnet ist, sind die ersten Pufferelemente in axialer Richtung und in radialer Richtung festgelegt. Der Einsatz mehrerer erster schwingungsdämpfender Pufferelemente erlaubt eine besonders wirksame Dämpfung sowohl von axialen als auch von radialen Schwingungen der Motorpumpeneinheit.

Bevorzugt sind die zweiten taschenförmigen Aufnahmen über den Umfang der Motorpumpeneinheit verteilt angeordnet.

Besonders vorteilhaft ist es, wenn die zweiten taschenförmigen Aufnahmen über den Umfang der Motorpumpeneinheit gleichmäßig verteilt angeordnet sind.

Es kann beispielsweise vorgesehen sein, dass drei, vier oder sechs zweite taschenförmige Aufnahmen über den Umfang der Motorpumpeneinheit verteilt angeordnet sind.

Die ersten und zweiten taschenförmigen Aufnahmen erstrecken sich bevorzugt jeweils entlang des Umfangs eines axialen Endabschnitts eines ersten Pufferelements und liegen an einer Endfläche eines axialen Endabschnitts an.

Es kann beispielsweise vorgesehen sein, dass die ersten und zweiten taschenförmigen Aufnahmen im Querschnitt U-förmig ausgestaltet sind.

Bei einer vorteilhaften Ausgestaltung der Erfindung bildet die erste Halteeinrichtung einen Haltering aus, der die Motorpumpeneinheit unter Ausbildung eines Ringspalts in Umfangsrichtung umgibt.

Eine besonders einfache Montage des erfindungsgemäßen Hochdruckreinigungsgeräts wird bei einer vorteilhaften Ausgestaltung der Erfindung dadurch erzielt, dass der Haltering zwei einander diametral gegenüberliegende radiale Erweiterungsabschnitte aufweist, die jeweils in eine innenseitige Gehäuseaufnahme des Gerätegehäuses eintauchen. So kann beispielsweise vorgesehen sein, dass das Gerätegehäuse eine vordere und eine hintere Gehäusehalbschale aufweist, die die Motorpumpeneinheit zwischen sich aufnehmen und die an ihrer Innenseite jeweils eine Gehäuseaufnahme aufweisen, in die der Haltering mit einem Erweiterungsabschnitt eintaucht.

Bevorzugt bilden die Erweiterungsabschnitte jeweils mit einer Gehäuseaufnahme einen Formschluss aus. Dies erlaubt eine besonders stabile Lagerung des Halterings am Gerätegehäuse.

Von Vorteil ist es, wenn die Erweiterungsabschnitte mittels Verbindungselementen jeweils mit einer Gehäuseaufnahme lösbar verbunden sind. Als Verbindungselemente können beispielsweise Verbindungsschrauben zum Einsatz kommen.

Bei einer vorteilhaften Ausgestaltung der Erfindung weist der Haltering zwei Halbringe auf, die jeweils mindestens eine erste taschenförmige Aufnahme aufweisen. Die beiden Halbringe können sich in Umfangsrichtung der Motorpumpeneinheit erstrecken. Insbesondere können sich die beiden Halbringe jeweils über einen Winkelbereich von etwa 180° erstrecken. Der Einsatz der Halbringe ermöglicht eine weitere Vereinfachung der Montage des Hochdruckreinigungsgeräts.

Bevorzugt sind die beiden Halbringe miteinander verbunden. Insbesondere können die beiden Halbringe lösbar miteinander verbunden sein.

Günstig ist es, wenn jeder der beiden Halbringe mit dem Gerätegehäuse lösbar verbunden ist. Dies erhöht insgesamt die Stabilität des Halterings.

Die zweite Halteeinrichtung weist bei einer vorteilhaften Ausführungsform der Erfindung mehrere dritte taschenförmige Aufnahmen auf, die jeweils unter Zwischenlage eines zweiten schwingungsdämpfenden Pufferelements in axialer Richtung fluchtend zu einer an der Motorpumpeneinheit positionierten vierten taschenförmigen Aufnahme angeordnet sind, wobei jedes zweite Pufferelement einander axial gegenüberliegende Endabschnitte aufweist, die jeweils von einer der dritten und vierten Aufnahmen aufgenommen werden. Bei einer derartigen Ausgestaltung der Erfindung kommen mehrere zweite schwingungsdämpfende Pufferelemente zum Einsatz, über die die zweite Halteeinrichtung mechanisch mit der Motorpumpeneinheit verbunden ist. Die zweiten Pufferelemente sind mittels der dritten und vierten Aufnahmen in axialer Richtung und in radialer Richtung festgelegt und ermöglichen es, sowohl axiale als auch radiale Schwingungen der Motorpumpeneinheit wirkungsvoll zu dämpfen.

Bevorzugt erstrecken sich die dritten und vierten taschenförmigen Aufnahmen jeweils entlang des Umfangs eines axialen Endabschnitts eines zweiten schwingungsdämpfenden Pufferelements und liegen an einer Endfläche des axialen Endabschnitts an.

Es kann beispielsweise vorgesehen sein, dass die dritten und vierten taschenförmigen Aufnahmen im Querschnitt U-förmig ausgestaltet sind.

Die zweite Halteeinrichtung bildet bei einer bevorzugten Ausgestaltung der Erfindung ein Stützglied auf, auf dem die Motorpumpeneinheit während des Betriebs des Hochdruckreinigungsgeräts aufsitzt.

Die mindestens eine vierte taschenförmige Aufnahme kann beispielsweise an der Außenseite einer Bodenwand der Motorpumpeneinheit angeordnet sein.

Günstig ist es, wenn das Stützglied einen Stützkörper aufweist, an dessen der Motorpumpeneinheit zugewandten Oberseite die mindestens eine dritte taschenförmige Aufnahme angeordnet ist. Über den Stützkörper kann die Motorpumpeneinheit in axialer Richtung auf konstruktiv einfache Weise abgestützt werden unter Zwischenlage von mindestens einem zweiten schwingungsdämpfenden Pufferelement.

Bezogen auf die Längsachse der Motorpumpeneinheit ist der Stützkörper bevorzugt rotationssymmetrisch ausgestaltet. Der Stützkörper kann beispielsweise die Form eines Zylinders oder eines Kegelstumpfes aufweisen.

Von Vorteil ist es, wenn das Stützglied ein Basisteil aufweist, an dem der Stützkörper angeordnet ist und das in eine innenseitig an einer Bodenwand des Gerätegehäuses angeordnete Halterung eintaucht. Die Halterung ermöglicht auf konstruktiv einfache Weise eine Festlegung des Stützglieds am Gerätegehäuse.

Von besonderem Vorteil ist es, wenn die ersten und zweiten Pufferelemente identisch ausgestaltet sind. Dies hat eine weitere Vereinfachung der Montage zur Folge und erlaubt es, die Pufferelemente in größerer Stückzahl und damit kostengünstiger herzustellen.

Die ersten und zweiten Pufferelemente sind bevorzugt plattenförmig ausgestaltet.

Günstig ist es, wenn die ersten und zweiten Pufferelemente aus einem Schaumstoffmaterial bestehen, vorzugsweise aus einem mikrozellularen Polyurethan-Elastomer. Derartige Materialien ermöglichen eine besonders wirkungsvolle Dämpfung von Schwingungen der Motorpumpeneinheit, so dass diese Schwingungen nur in sehr geringem Umfang auf das Gerätegehäuse übertragen werden.

Die Motorpumpeneinheit weist bei einer vorteilhaften Ausgestaltung der Erfindung ein erstes und ein zweites Motorgehäuseteil auf, die über zwei Verbindungsflansche miteinander verbunden sind, wobei die mindestens eine zweite taschenförmige Aufnahme an einem der beiden Verbindungsflansche angeordnet ist.

Bevorzugt ist die mindestens eine zweite taschenförmige Aufnahme an einer Seite eines Verbindungsflanschs angeordnet, die dem anderen Verbindungsflansch abgewandt ist.

Wie eingangs bereits erwähnt, ist es günstig, wenn der Motor des erfindungsgemäßen Hochdruckreinigungsgeräts als flüssigkeitsgekühlter Elektromotor ausgestaltet ist. Auf diese Weise können Lüftungsschlitze des Gerätegehäuses entfallen, und dies wiederum hat eine weitere Reduzierung der Geräuschentwicklung des Hochdruckreinigungsgeräts zur Folge.

Eine zusätzliche Verminderung der Geräuschentwicklung wird bei einer besonders bevorzugten Ausgestaltung der Erfindung dadurch erzielt, dass die Pumpe einen Pumpenauslass aufweist, der über eine flexible Schlauchleitung mit einem am Gerätegehäuse gehaltenen Flüssigkeitsauslassteil verbunden ist. Die Bereitstellung einer flexiblen Schlauchleitung zwischen den Pumpenauslass und einem am Gerätegehäuse gehaltenen Flüssigkeitsauslassteil vermindert die Übertragung von mechanischen Schwingungen vom Pumpenauslass zum Gerätegehäuse und reduziert dadurch die Geräuschentwicklung des Hochdruckreinigungsgeräts.

Die nachfolgende Beschreibung einer vorteilhaften Ausführungsform der Erfindung dient im Zusammenhang mit der Zeichnung der näheren Erläuterung. Es zeigen:

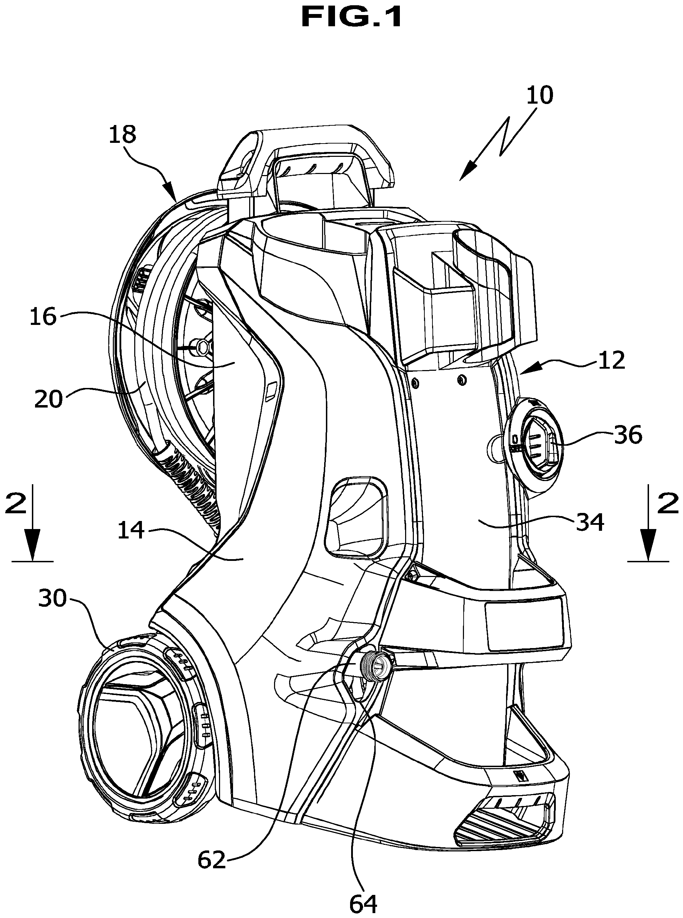

- Figur 1:: eine perspektivische Darstellung eines Hochdruckreinigungsgeräts;
- Figur 2:: eine Schnittansicht des Hochdruckreinigungsgeräts entlang der Linie 2-2 aus Figur 1;

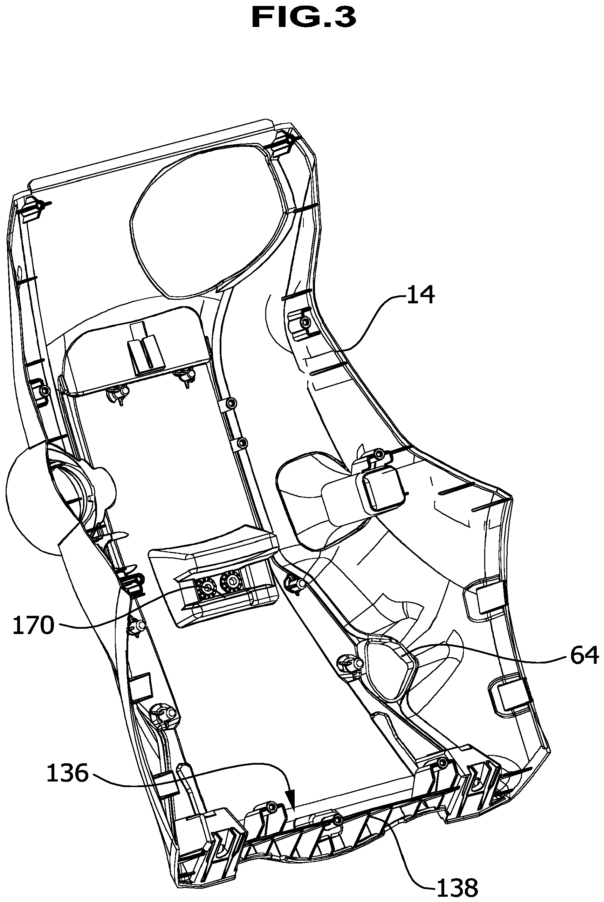

- Figur 3:: eine perspektivische Darstellung einer vorderen Gehäusehalbschale des Hochdruckreinigungsgeräts aus Figur 1;

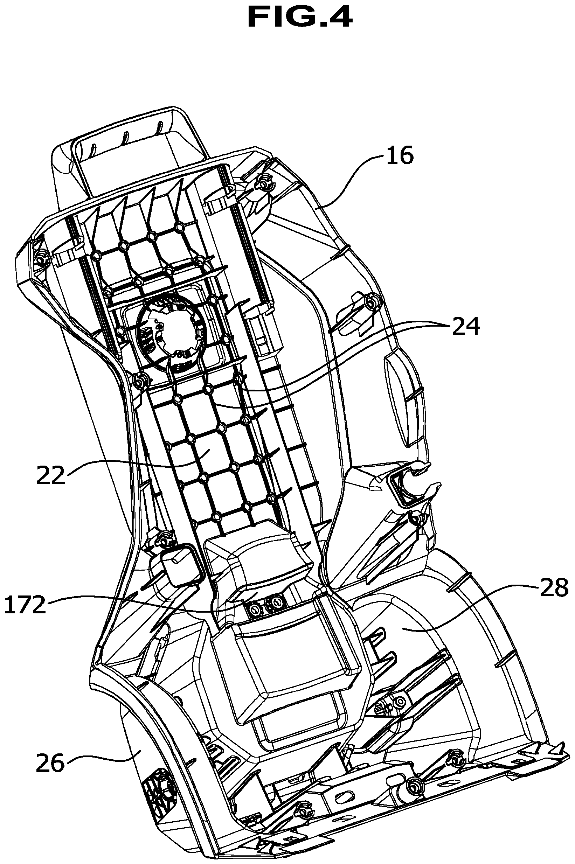

- Figur 4:: eine perspektivische Darstellung einer hinteren Gehäusehalbschale des Hochdruckreinigungsgeräts aus Figur 1;
- Figur 5:: eine Seitenansicht einer Motorpumpeneinheit des Hochdruckreinigungsgeräts, wobei die Motorpumpeneinheit von einer ersten Halteeinrichtung in Form eines Halterings in Umfangsrichtung umgeben ist und auf einer zweiten Halteeinrichtung in Form eines Stützglieds aufsitzt;
- Figur 6:: eine perspektivische Darstellung der Motorpumpeneinheit zusammen mit dem Haltering und dem Stützglied aus Figur 5;

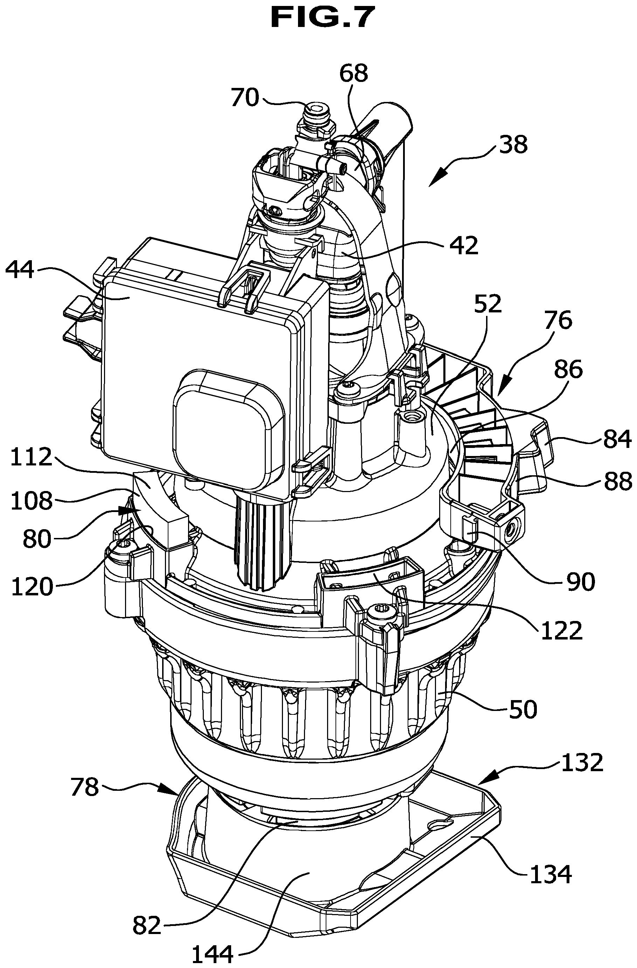

- Figur 7:: eine perspektivische Darstellung der Motorpumpeneinheit zusammen mit dem Haltering und dem Stützglied aus Figur 5, wobei ein Halbring des Halterings sowie ein erstes schwingungsdämpfendes Pufferelement ausgeblendet sind;
- Figur 8:: eine Schnittansicht eines flüssigkeitsgekühlten Elektromotors der Motorpumpeneinheit;
- Figur 9:: eine Schnittansicht der Motorpumpeneinheit entlang der Linie 9-9 in Figur 5;

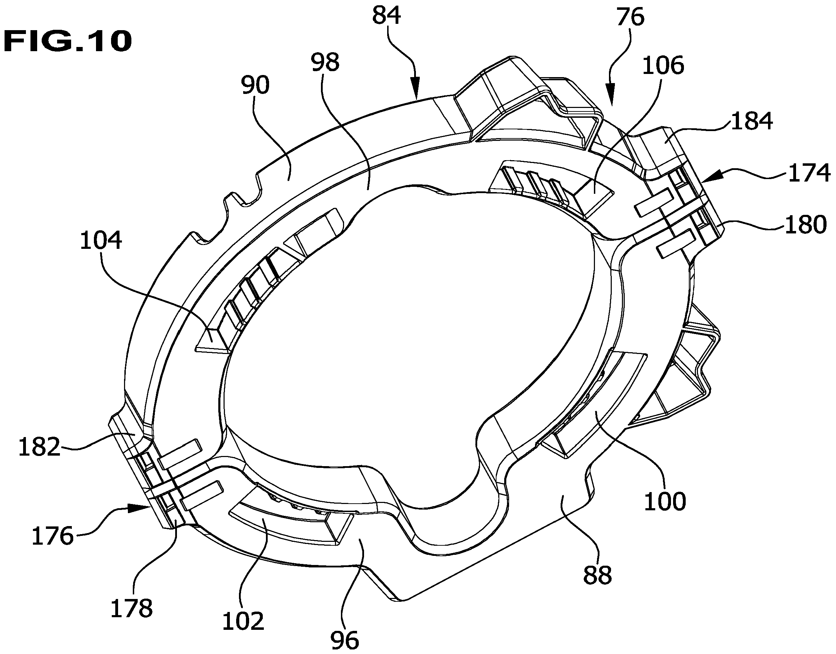

- Figur 10:: eine perspektivische Darstellung des Halterings schräg von unten, wobei der Haltering mehrere erste taschenförmige Aufnahmen aufweist;

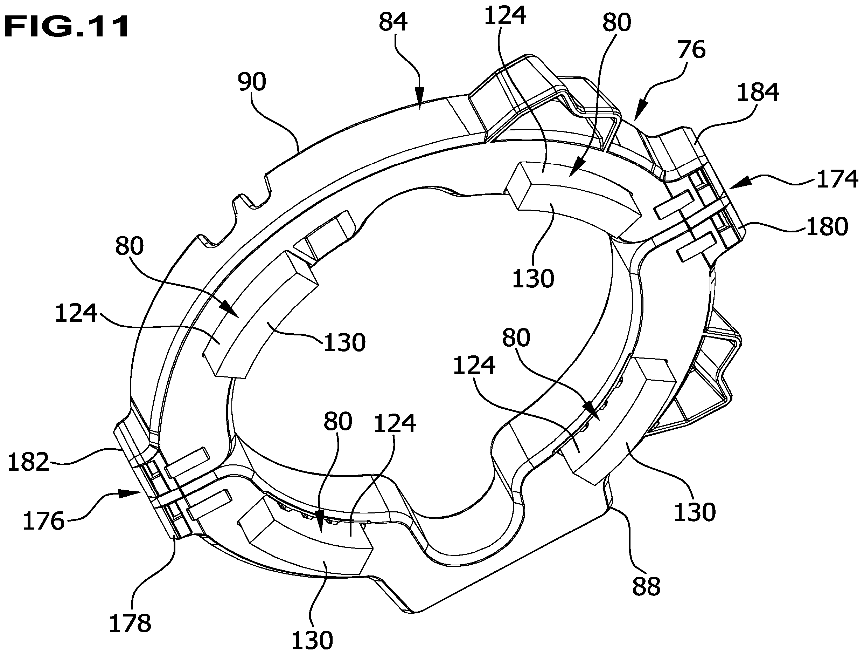

- Figur 11:: eine perspektivische Darstellung des Halterings aus Figur 10, wobei erste schwingungsdämpfende Pufferelemente in die ersten taschenförmigen Aufnahmen eingesetzt sind;

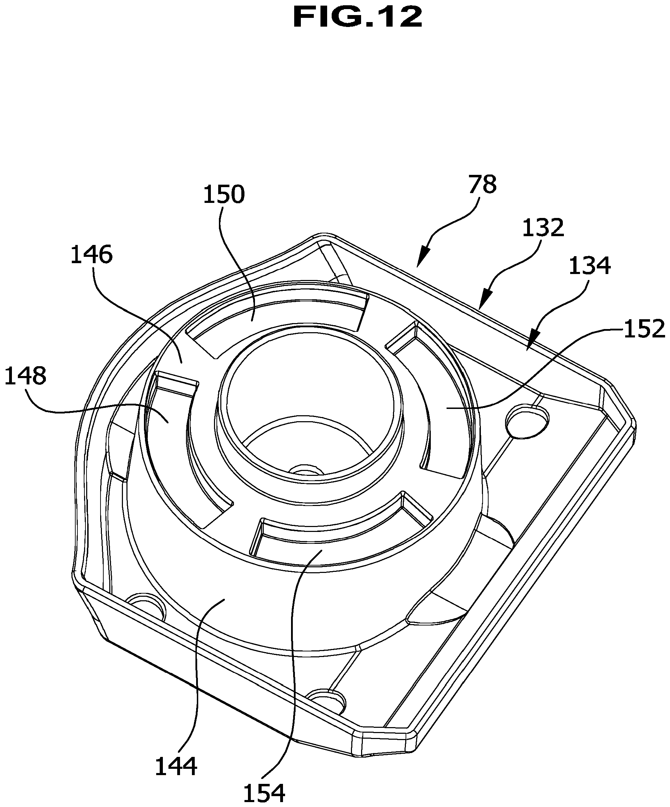

- Figur 12:: eine perspektivische Darstellung des Stützglieds schräg von oben, wobei das Stützglied mehrere dritte taschenförmige Aufnahmen aufweist;

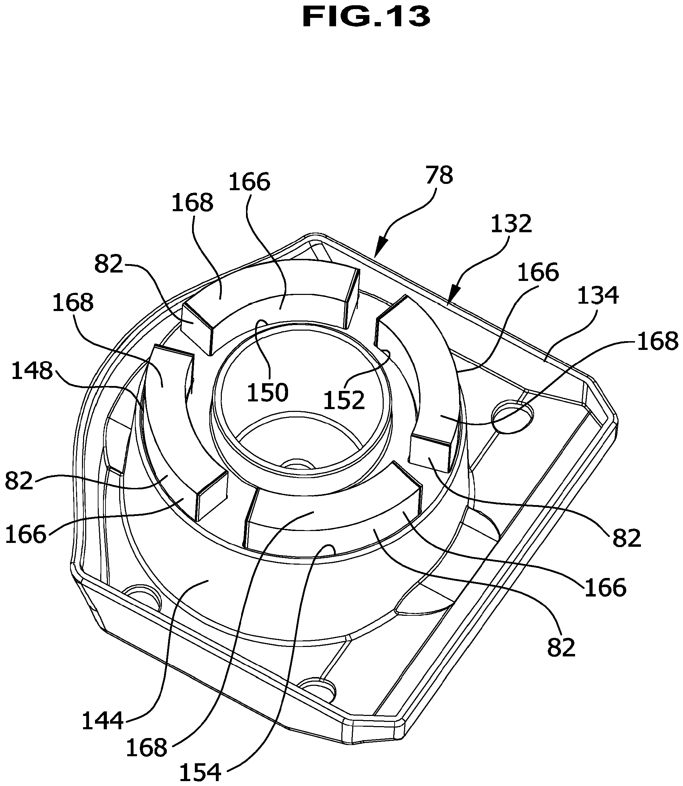

- Figur 13:: eine perspektivische Darstellung des Stützglieds aus Figur 12, wobei zweite schwingungsdämpfende Pufferelemente in die dritten taschenförmigen Aufnahmen eingesetzt sind;

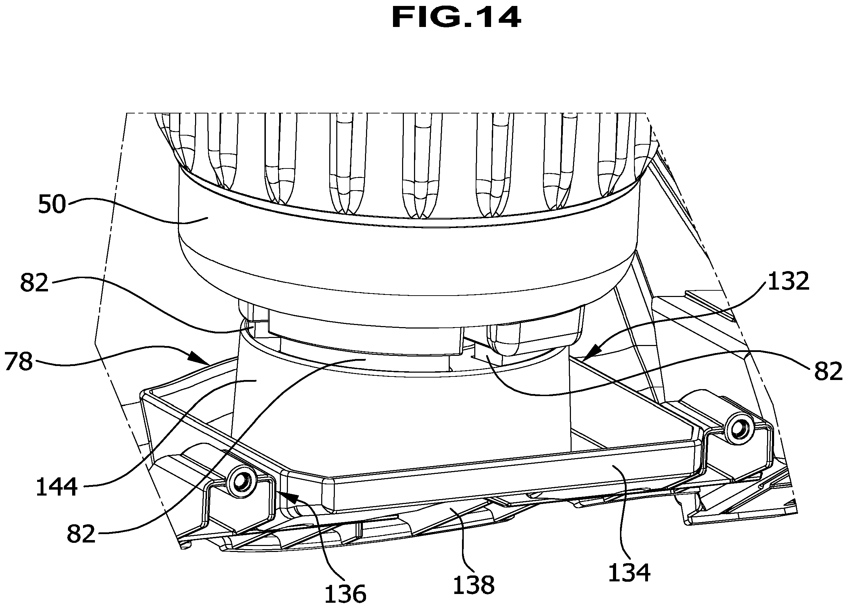

- Figur 14:: eine perspektivische Darstellung einer Halterung, in die das Stützglied eintaucht;
- Figur 15:: eine perspektivische Darstellung einer flexiblen Schlauchleitung, über die ein Pumpenauslass der Motorpumpeneinheit mit einem an der hinteren Gehäusehalbschale festgelegten Flüssigkeitsauslassteil verbunden ist.

In der Zeichnung ist eine vorteilhafte Ausführungsform eines erfindungsgemäßen Hochdruckreinigungsgeräts schematisch dargestellt, das insgesamt mit dem Bezugszeichen 10 belegt ist. Das Hochdruckreinigungsgerät 10 weist ein Gerätegehäuse 12 auf, das von einer vorderen Gehäusehalbschale 14 und einer hinteren Gehäusehalbschale 16 gebildet wird. Bei der dargestellten Ausführungsform ist an der Außenseite der hinteren Gehäusehalbschale 16 eine Schlauchtrommel 18 angeordnet, auf die ein Hochdruckschlauch 20 aufgewickelt ist. Eine derartige Schlauchtrommel ist jedoch nicht zwingend erforderlich.

Die hinteren Gehäusehalbschale 16 ist wannenartig ausgebildet und umfasst eine Rückwand 22 mit einer Vielzahl von innenseitig angeordneten Verstärkungsrippen 24. An einander abgewandten Seitenwänden 26, 28 der hinteren Gehäusehalbschale 16 sind außenseitig Laufräder 30, 32 drehbar gelagert, mit deren Hilfe das Hochdruckreinigungsgerät 10 verfahren werden kann.

Die vordere Gehäusehalbschale 14 ist nach Art einer Haube ausgestaltet und trägt auf ihrer der hinteren Gehäusehalbschale 16 abgewandten Vorderseite 34 einen Drehschalter 36, mit dessen Hilfe das Hochdruckreinigungsgerät 10 ein- und ausgeschaltet werden kann.

Die beiden Gehäusehalbschalen 14, 16 nehmen zwischen sich eine Motorpumpeneinheit 38 auf, die einen flüssigkeitsgekühlten Elektromotor 40 und eine von diesem angetriebene Pumpe 42 aufweist. Darüber hinaus umfasst die Motorpumpeneinheit 38 eine elektrische Schalteinrichtung 44, die über eine Schaltwelle 46 mit dem Drehschalter 36 verbunden ist.

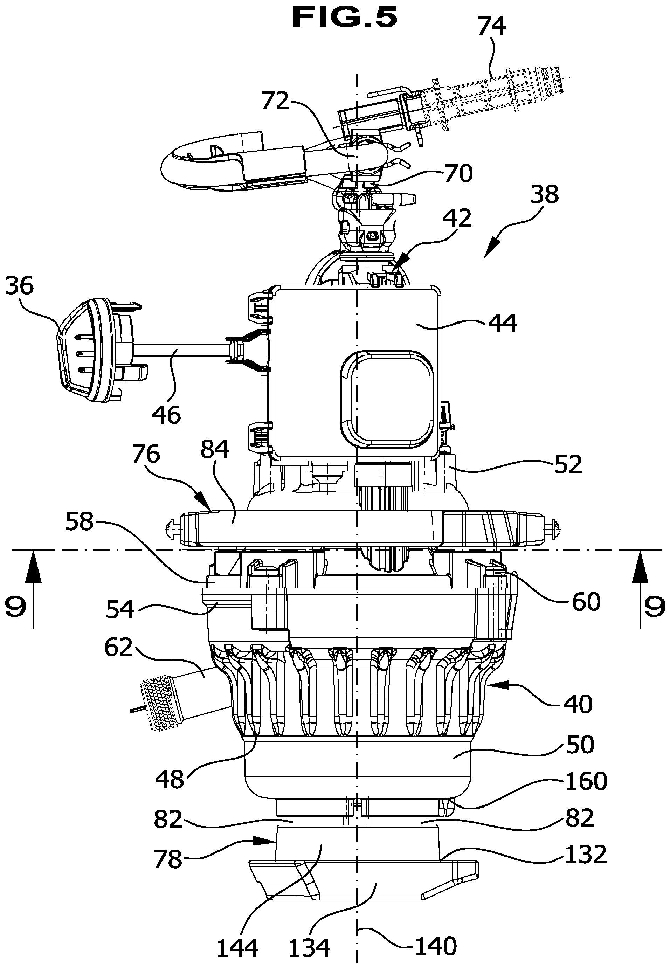

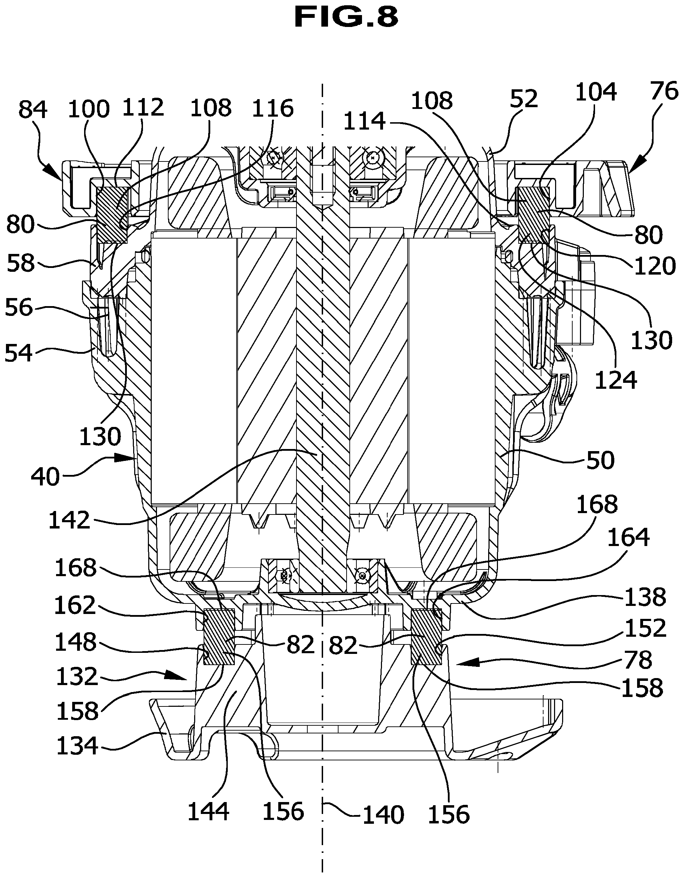

Wie insbesondere aus den Figuren 5 und 8 deutlich wird, weist der Elektromotor 40 ein Motorgehäuse 48 auf mit einem topfförmigen ersten Motorgehäuseteil 50 und einem das erste Motorgehäuseteil 50 überdeckenden haubenförmigen zweiten Motorgehäuseteil 52. Das erste Motorgehäuseteil 50 bildet einen ersten Verbindungsflansch 54 aus, in den ein Kühlkanal 56 eingeformt ist, und das zweite Motorgehäuseteil 52 bildet einen zweiten Verbindungsflansch 58 aus. Über die beiden Verbindungsflansche 54, 58 sind die beiden Motorgehäuseteile 50, 52 miteinander verbunden. Zu diesem Zweck sind die beiden Verbindungsflansche 54, 58 mittels Verbindungsschrauben 60 miteinander verschraubt.

Die über eine starre Einlassleitung 62, die eine Einlassöffnung 64 der vorderen Gehäusehalbeschale 14 durchgreift, kann dem Kühlkanal 56 unter Druck zu setzende Reinigungsflüssigkeit zugeführt werden. Zu diesem Zweck kann an das aus der vorderen Gehäusehalbschale 14 herausragende Ende der Einlassleitung 62 eine an sich bekannte und deshalb in der Zeichnung nicht dargestellte Versorgungsleitung, beispielsweise ein Versorgungsschlauch, angeschlossen werden.

Der Kühlkanal 56 steht über eine Verbindungsleitung 66 mit einem Pumpeneinlass 68 in Strömungsverbindung, so dass die unter Druck zu setzende Reinigungsflüssigkeit, nachdem sie den Kühlkanal 56 durchströmt und hierbei den Elektromotor 40 gekühlt hat, der Pumpe 42 zugeführt werden kann. Die Reinigungsflüssigkeit wird von der Pumpe 42 unter Druck gesetzt und über einen Pumpenauslass 70 abgegeben.

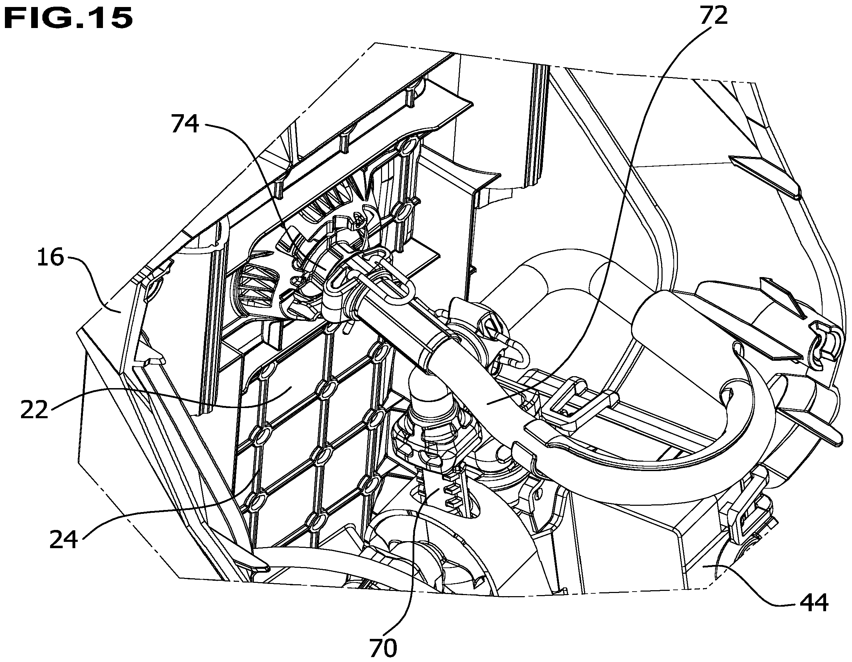

Wie insbesondere aus Figur 15 deutlich wird, ist der Pumpenauslass 70 über eine flexible Schlauchleitung 72 mit einem starren Flüssigkeitsauslassteil 74 verbunden, das die Rückwand 22 der hinteren Gehäusehalbschale 16 durchgreift und an dieser festgelegt ist. An das Flüssigkeitsauslassteil 74 schließt sich der Hochdruckschlauch 20 an, der auf die Schlauchtrommel 18 aufgewickelt ist.

Zur Lagerung der Motorpumpeneinheit 38 an den beiden Gehäusehalbschalen 14, 16 weist das Hochdruckreinigungsgerät 10 eine erste Halteeinrichtung 76 und eine zweite Halteeinrichtung 78 auf. Die erste Halteeinrichtung 76 ist über erste schwingungsdämpfende Pufferelemente 80 mit der Motorpumpeneinheit 38 verbunden, und die zweite Halteeinrichtung 78 ist über zweite schwingungsdämpfende Pufferelemente 82 mit der Motorpumpeneinheit 38 verbunden. Dies wird nachfolgend näher erläutert.

Die erste Halteeinrichtung 76 bildet einen Haltering 84 aus, der die Motorpumpeneinheit 38 oberhalb des zweiten Verbindungsflanschs 58 unter Ausbildung eines Ringspalts 86 in Umfangsrichtung umgibt. Der Haltering 84 wird von zwei Halbringen 88, 90 gebildet, die sich in Umfangsrichtung jeweils über einen Winkelbereich von 180° erstrecken. Die beiden Halbringe 88, 90 sind miteinander verbunden.

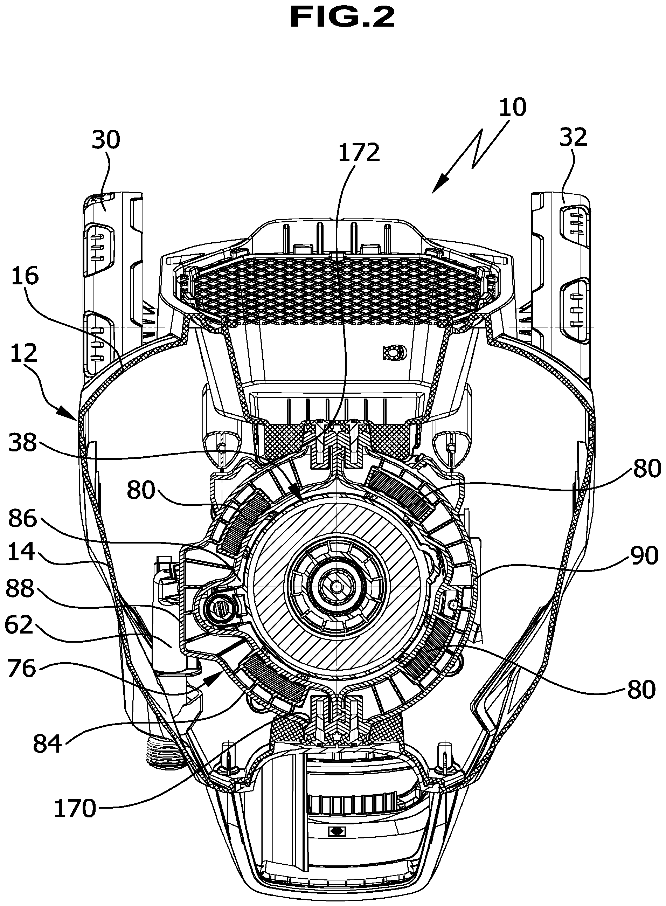

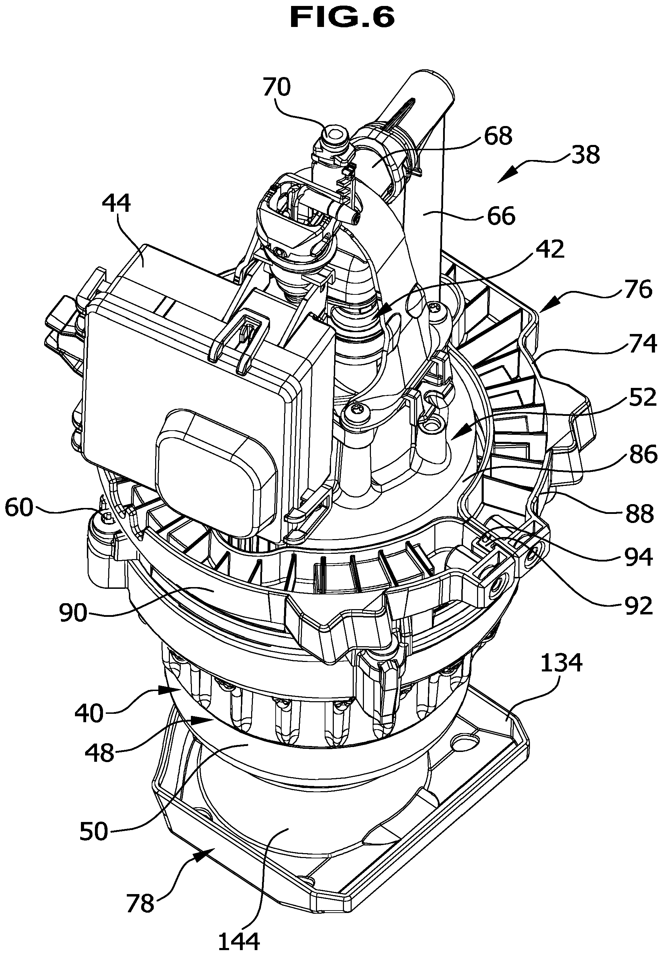

Bei der dargestellten Ausführungsform weist einer der beiden Halbringe 88, 90 einen im Querschnitt T-förmigen Verbindungsstift 92 auf, der einen Verbindungsschlitz 94 des anderen der beiden Halbringe 88, 90 hintergreift. Dies wird insbesondere aus den Figuren 2 und 6 deutlich.

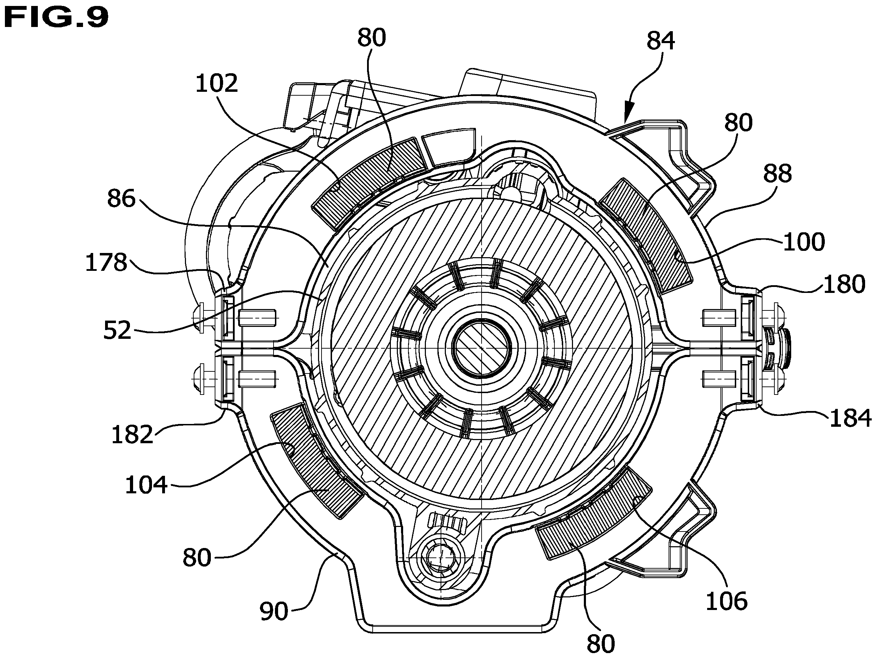

In die dem ersten Motorgehäuseteil 50 zugewandten Unterseiten der Halbringe 88, 90 sind jeweils zwei erste taschenförmige Aufnahmen 100, 102 beziehungsweise 104, 106 eingeformt, in die jeweils ein erstes schwingungsdämpfendes Pufferelement 80 mit einem oberen axialen Endabschnitt 108 eintaucht. Die ersten taschenförmigen Aufnahmen 100, 102, 104, 106 erstrecken sich jeweils entlang des Umfangs eines oberen axialen Endabschnitts 108 und liegen an dessen oberer Endfläche 112 an. Dies wird insbesondere aus den Figuren 8 und 9 deutlich.

Die Motorpumpeneinheit 38 weist auf der dem Haltering 84 zugewandten Oberseite 114 des zweiten Verbindungsflanschs 58 zweite taschenförmige Aufnahmen 116, 118, 120, 122 auf, die jeweils axial fluchtend zu einer ersten taschenförmigen Aufnahme 100, 102, 104 bzw. 106 ausgerichtet sind. Die zweiten taschenförmigen Aufnahmen 116, 118, 120, 122 nehmen jeweils einen unteren axialen Endabschnitt 124 eines ersten schwingungsdämpfenden Pufferelements 80 auf, wobei der untere Endabschnitt 124 dem oberen Endabschnitt 108 axial gegenüberliegt. Die zweiten Aufnahmen 116, 118, 120, 122 erstrecken sich jeweils entlang des Umfangs eines unteren axialen Endabschnitts 124 und liegen an dessen dem zweiten Verbindungsflansch 58 zugewandten unteren Endfläche 130 an.

Die ersten und zweiten taschenförmigen Aufnahmen 100, 102, 104, 106, 116, 118, 120, 122 sind somit paarweise fluchtend zueinander ausgerichtet und nehmen jeweils ein erstes schwingungsdämpfendes Pufferelement 80 zwischen sich auf, wobei das erste schwingungsdämpfende Pufferelement 80 mittels der ersten und zweiten Aufnahmen in axialer Richtung und in radialer Richtung festgelegt ist.

Die ersten schwingungsdämpfenden Pufferelemente 80 sind über den Umfang der Motorpumpeneinheit 38 gleichmäßig verteilt angeordnet. Die ersten schwingungsdämpfenden Pufferelemente 80 sind bei der dargestellten Ausführungsform ebenso wie die nachfolgend näher erläuterten zweiten schwingungsdämpfenden Pufferelemente 82 identisch ausgestaltet. Sie bestehen aus einem mikrozellularen Polyurethan-Elastomer.

Die zweite Halteeinrichtung 78 bildet ein Stützglied 132 aus, auf dem die Motorpumpeneinheit 38 unter Zwischenlage von mehreren zweiten schwingungsdämpfenden Pufferelementen 82 aufsitzt. Das Stützglied 132 weist ein wannenförmiges Basisteil 134 auf, das in eine Halterung 136 der vorderen Gehäusehalbschale 14 eintaucht. Die Halterung 136 ist an der Innenseite einer Bodenwand 138 der vorderen Gehäusehalbschale 14 angeordnet.

Die Motorpumpeneinheit 38 weist eine Längsachse 140 auf, die koaxial zu einer Motorwelle 142 des Elektromotors 40 ausgerichtet ist. An das Basisteil 134 des Stützglieds 132 schließt sich in Richtung auf die Motorpumpeneinheit 38 ein rotationssymmetrisch zur Längsachse 140 ausgerichteter Stützkörper 144 des Stützglieds 132 an. In eine der Motorpumpeneinheit 38 zugewandte Oberseite 146 des Stützkörpers 144 sind vier identisch ausgestaltete dritte taschenförmige Aufnahmen 148, 150, 152, 154 eingeformt, in die jeweils ein unterer axialer Endabschnitt 156 eines zweiten schwingungsdämpfenden Pufferelements 82 eintaucht. Die dritten taschenförmigen Aufnahmen 148, 150, 152, 154 erstrecken sich jeweils entlang des Umfangs eines unteren Endabschnitts 156 und liegen an dessen unterer Endfläche 158 an.

Die Motorpumpeneinheit 38 weist an der Außenseite einer Bodenwand 160 des ersten Motorgehäuseteils 50 vier identisch ausgestaltete vierte taschenförmige Aufnahmen auf, die jeweils fluchtend zu einer dritten taschenförmigen Aufnahme des Stützglieds 132 ausgerichtet sind, wobei in der Zeichnung nur zwei vierte taschenförmige Aufnahmen 162, 164 dargestellt sind. In die vierten taschenförmigen Aufnahmen 162, 164 taucht jeweils ein oberer axialer Endabschnitt 166 eines zweiten schwingungsdämpfenden Pufferelements 82 ein, wobei sich die vierten taschenförmigen Aufnahmen 162, 164 jeweils entlang des Umfangs eines oberen axialen Endabschnitts 166 erstrecken und an dessen oberer Endfläche 168 anliegen.

Die dritten und vierten taschenförmigen Aufnahmen 148, 150, 152, 154, 162, 164 sind somit paarweise fluchtend zueinander ausgerichtet und nehmen jeweils ein zweites schwingungsdämpfendes Pufferelement 82 zwischen sich auf, wobei die zweiten schwingungsdämpfenden Pufferelemente 82 mittels der dritten und vierten Aufnahmen in axialer Richtung und in radialer Richtung festgelegt sind.

Die Motorpumpeneinheit 38 ist über die ersten schwingungsdämpfenden Pufferelemente 80 und die zweiten schwingungsdämpfenden Pufferelemente 82 und die beiden Halteeinrichtungen 76, 78 am Gerätegehäuse 12 gelagert. Die zweite Halteeinrichtung 78 wird in Form des Stützglieds 32 mittels der Halterung 136 am Gerätegehäuse 12 gehalten, und die erste Halteeinrichtung 76 in Form des Halterings 84 wird mittels einer an der Innenseite der vorderen Gehäusehalbschale 14 angeordneten vorderen Gehäuseaufnahme 170 und einer an der Innenseite der hinteren Gehäusehalbschale 16 angeordneten hinteren Gehäuseaufnahme 172 am Gerätegehäuse 12 fixiert. Der Haltering 84 weist hierzu zwei einander diametral gegenüberliegende radiale Erweiterungsabschnitte 174, 176 auf, die jeweils in eine der beiden Gehäuseaufnahmen 170, 172 eintauchen. Die Erweiterungsabschnitte 174, 176 werden von Endabschnitten 178, 180, 182, 184 der beiden Halbringe 88, 90 gebildet. Jeweils ein vorderer Endabschnitt 178, 182 der beiden Halbringe 88, 90 taucht hierbei in die vordere Gehäuseaufnahme 170 ein, und jeweils ein hinterer Endabschnitt 180, 184 der beiden Halbringe 88, 90 taucht in die hintere Gehäuseaufnahme 172 ein. Die Endabschnitte 178, 180, 182, 184 der Halbringe 88, 90 können hierbei mit der jeweiligen Gehäuseaufnahme 170, 172 verschraubt werden.

Das erfindungsgemäße Hochdruckreinigungsgerät 10 zeichnet sich durch eine sehr wirkungsvolle Dämpfung der axialen und radialen Schwingungen der Motorpumpeneinheit aus, so dass das Hochdruckreinigungsgerät 10 nur eine geringe Geräuschentwicklung aufweist. Die axiale Ausrichtung der taschenförmigen Aufnahmen, in die die ersten und zweiten Pufferelemente 80, 82 eintauchen, erlauben es, die schwingungsdämpfenden Pufferelemente 80, 82 in axialer Richtung zu montieren, und anschließend kann die Motorpumpeneinheit 38 zusammen mit den beiden Halteeinrichtungen 76, 78 auf einfache Weise in die hintere Gehäusehalbschale 16 eingesetzt werden, so dass anschließend die vordere Gehäusehalbschale 14 auf die hintere Gehäusehalbschale 16 und die darin angeordnete Motorpumpeneinheit 38 aufgesetzt werden kann. Das erfindungsgemäße Hochdruckreinigungsgerät 10 zeichnet sich somit auch durch eine einfache Montage aus.

## Patentansprüche

1. Hochdruckreinigungsgerät mit einem Gerätegehäuse (12), das eine Motorpumpeneinheit (38) mit einem Motor (40) und einer von diesem angetriebenen Pumpe (42) umgibt, wobei die Motorpumpeneinheit (38) über schwingungsdämpfende Pufferelemente (80, 82) am Gerätegehäuse (12) gehalten ist, wobei das Hochdruckreinigungsgerät (10) eine erste und eine zweite Halteeinrichtung (76, 78) aufweist, die am Gerätegehäuse (12) festgelegt sind, **dadurch gekennzeichnet, dass** die erste Halteeinrichtung mindestens eine erste taschenförmige Aufnahme (100, 102, 104, 106) aufweist, die unter Zwischenlage eines ersten schwingungsdämpfenden Pufferelements (80) in axialer Richtung fluchtend zu einer an der Motorpumpeneinheit (38) positionierten zweiten taschenförmigen Aufnahme (116, 118, 120, 122) angeordnet ist, wobei das erste schwingungsdämpfende Pufferelement (80) zwei einander axial gegenüberliegende Endabschnitte (108, 124) aufweist, die jeweils von einer der ersten und zweiten taschenförmigen Aufnahmen aufgenommen werden, und wobei das erste schwingungsdämpfende Pufferelement (80) mittels der ersten und zweiten Aufnahmen in axialer Richtung und in radialer Richtung festgelegt ist, und wobei die zweite Halteeinrichtung (78) mindestens eine dritte taschenförmige Aufnahme (148, 150, 152, 154) aufweist, die unter Zwischenlage eines zweiten schwingungsdämpfenden Pufferelements (82) in axialer Richtung fluchtend zu einer an der Motorpumpeneinheit (38) positionierten vierten taschenförmigen Aufnahme (162, 164) angeordnet ist, wobei das zweite schwingungsdämpfende Pufferelement (82) zwei einander axial gegenüberliegende Endabschnitte (156, 166) aufweist, die jeweils von einer der dritten und vierten Aufnahmen aufgenommen werden, und wobei das zweite schwingungsdämpfende Pufferelement mittels der dritten und vierten Aufnahmen in axialer Richtung und in radialer Richtung festgelegt ist.

2. Hochdruckreinigungsgerät nach Anspruch 1, **dadurch gekennzeichnet, dass** die erste und zweite Halteeinrichtung (76, 78) bezogen auf eine Längsachse (140) der Motorpumpeneinheit (38) in einem axialen Abstand zueinander angeordnet sind.

3. Hochdruckreinigungsgerät nach Anspruch 1 oder 2, **dadurch gekennzeichnet, dass** die erste Halteeinrichtung (76) mehrere erste taschenförmige Aufnahmen (100, 102, 104, 106) aufweist, die jeweils unter Zwischenlage eines ersten schwingungsdämpfenden Pufferelements (80) in axialer Richtung fluchtend zu einer an der Motorpumpeneinheit (38) positionierten zweiten taschenförmigen Aufnahme (116, 118, 120, 122) angeordnet sind, wobei jedes erste schwingungsdämpfende Pufferelement (80) zwei einander axial gegenüberliegende Endabschnitte (108, 124) aufweist, die jeweils von einem der ersten und zweiten Aufnahmen aufgenommen werden, vorzugsweise dass die zweiten taschenförmigen Aufnahmen (116, 118, 120, 122) über den Umfang der Motorpumpeneinheit (38) verteilt angeordnet sind.

4. Hochdruckreinigungsgerät nach einem der voranstehenden Ansprüche, **dadurch gekennzeichnet, dass** sich die ersten und zweiten taschenförmigen Aufnahmen (100, 102, 104, 106, 116, 118, 120, 122) jeweils entlang des Umfangs eines axialen Endabschnitts (108, 124) eines ersten schwingungsdämpfenden Pufferelements (80) erstrecken und an einer Endfläche (112, 130) des axialen Endabschnitts (108, 124) anliegen.

5. Hochdruckreinigungsgerät nach einem der voranstehenden Ansprüche, **dadurch gekennzeichnet, dass** die erste Halteeinrichtung (76) einen Haltering (84) ausbildet, der die Motorpumpeneinheit (38) unter Ausbildung eines Ringspalts (86) in Umfangsrichtung umgibt, vorzugsweise dass der Haltering (84) zwei einander diametral gegenüberliegende radiale Erweiterungsabschnitte (174, 176) aufweist, die jeweils in eine innenseitige Gehäuseaufnahme (170, 172) des Gerätegehäuses (12) eintauchen, insbesondere dass die Erweiterungsabschnitte (174, 176) jeweils mit einer Gehäuseaufnahme (170, 172) einen Formschluss ausbilden und/oder dass die Erweiterungsabschnitte (174, 176) mittels Verbindungselemente jeweils mit einer Gehäuseaufnahme (170, 172) lösbar verbunden sind.

6. Hochdruckreinigungsgerät nach Anspruch 5, **dadurch gekennzeichnet, dass** der Haltering (84) zwei Halbringe (88, 90) aufweist, die jeweils mindestens eine erste taschenförmige Aufnahme (100, 102, 104, 106) aufweisen, vorzugsweise dass die Halbringe (88, 90) lösbar miteinander verbunden sind und/oder dass jeder der beiden Halbringe (88, 90) mit dem Gerätegehäuse (12) lösbar verbunden ist.

7. Hochdruckreinigungsgerät nach einem der voranstehenden Ansprüche, **dadurch gekennzeichnet, dass** die zweite Halteeinrichtung (78) mehrere dritte taschenförmige Aufnahmen (148, 150, 152, 154) aufweist, die jeweils unter Zwischenlage eines zweiten schwingungsdämpfenden Pufferelements (82) in axialer Richtung fluchtend zu einer an der Motorpumpeneinheit (38) positionierten vierten taschenförmigen Aufnahme (162, 164) angeordnet sind, wobei jedes zweite schwingungsdämpfende Pufferelement (82) einander axial gegenüberliegende Endabschnitte (156, 166) aufweist, die jeweils von einer der dritten und vierten Aufnahmen aufgenommen werden, vorzugsweise dass sich die dritten und vierten taschenförmigen Aufnahmen jeweils entlang des Umfangs eines axialen Endabschnitts (156, 166) eines zweiten schwingungsdämpfenden Pufferelements (82) erstrecken und an einer Endfläche (158, 168) des axialen Endabschnitts (156, 166) anliegen.

8. Hochdruckreinigungsgerät nach einem der voranstehenden Ansprüche, **dadurch gekennzeichnet, dass** die zweite Halteeinrichtung (78) ein Stützglied (132) ausbildet, auf dem die Motorpumpeneinheit (38) während des Betriebs des Hochdruckreinigungsgeräts (10) aufsitzt.

9. Hochdruckreinigungsgerät nach Anspruch 8, **dadurch gekennzeichnet, dass** die mindestens eine vierte taschenförmige Aufnahme (162, 164) an einer Außenseite einer Bodenwand (160) der Motorpumpeneinheit (38) angeordnet ist.

10. Hochdruckreinigungsgerät nach Anspruch 8 oder 9, **dadurch gekennzeichnet, dass** das Stützglied (132) einen Stützkörper (144) aufweist, an dessen der Motorpumpeneinheit (38) zugewandte Oberseite (146) die mindestens eine dritte taschenförmige Aufnahme (148, 150, 152, 154) angeordnet ist.

11. Hochdruckreinigungsgerät nach Anspruch 10, **dadurch gekennzeichnet, dass** der Stützkörper (144) bezogen auf die Längsachse (140) der Motorpumpeneinheit (38) rotationssymmetrisch ausgestaltet ist und/oder dass das Stützglied (132) ein Basisteil (134) aufweist, an dem der Stützkörper (144) angeordnet ist und das in eine innenseitig an einer Bodenwand (138) des Gerätegehäuses (12) angeordnete Halterung eintaucht.

12. Hochdruckreinigungsgerät nach einem der voranstehenden Ansprüche, **dadurch gekennzeichnet, dass** mindestens eines der Folgenden gilt:
- die ersten und zweiten Pufferelemente (80, 82) sind identisch ausgestaltet;
- die ersten und zweiten Pufferelemente (80, 82) sind plattenförmig ausgestaltet;
- die ersten und zweiten Pufferelemente (80, 82) bestehen aus einem mikrozellularen Polyurethan-Elastomer.

13. Hochdruckreinigungsgerät nach einem der voranstehenden Ansprüche, **dadurch gekennzeichnet, dass** die Motorpumpeneinheit (38) ein erstes und ein zweites Motorgehäuseteil (50, 52) aufweist, die über zwei Verbindungsflansche miteinander verbunden sind, wobei die mindestens eine zweite taschenförmige Aufnahme (116, 118, 120, 122) an einem der beiden Verbindungsflansche (58) angeordnet ist.

14. Hochdruckreinigungsgerät nach einem der voranstehenden Ansprüche, **dadurch gekennzeichnet, dass** die Pumpe (42) einen Pumpenauslass (70) aufweist, der über eine flexible Schlauchleitung (72) mit einem am Gerätegehäuse (12) gehaltenen Flüssigkeitsauslassteil (74) verbunden ist.

## Claims

1. High pressure cleaning appliance with an appliance housing (12), which surrounds a motor pump unit (38) comprising a motor (40) and a pump (42) driven by said motor (40), wherein the motor pump unit (38) is held on the appliance housing (12) by way of vibration-damping buffer elements (80, 82), wherein the high pressure cleaning appliance (10) comprises a first and a second holding device (76, 78), which are fixed to the appliance housing (12), **characterized in that** the first holding device comprises at least one first pocket-shaped receptacle (100, 102, 104, 106), which is arranged in alignment in the axial direction with a second pocket-shaped receptacle (116, 118, 120, 122) positioned on the motor pump unit (38), with the interposition of a first vibration-damping buffer element (80), wherein the first vibration-damping buffer element (80) comprises two axially opposing end portions (108, 124), which are each accommodated by one of the first and second pocket-shaped receptacles, and wherein the first vibration-damping buffer element (80) is fixed in the axial direction and in the radial direction by means of the first and second receptacles, and wherein the second holding device (78) comprises at least one third pocket-shaped receptacle (148, 150, 152, 154), which is arranged in alignment in the axial direction with a fourth pocket-shaped receptacle (162, 164) positioned on the motor pump unit (38), with the interposition of a second vibration-damping buffer element (82), wherein the second vibration-damping buffer element (82) comprises two axially opposing end portions (156, 166), which are each accommodated by one of the third and fourth receptacles, and wherein the second vibration-damping buffer element is fixed in the axial direction and in the radial direction by means of the third and fourth receptacles.

2. High pressure cleaning appliance in accordance with Claim 1, **characterized in that** the first and second holding device (76, 78) are arranged at an axial distance from one another with respect to a longitudinal axis (140) of the motor pump unit (38).

3. High pressure cleaning appliance in accordance with Claim 1 or 2, **characterized in that** the first holding device (76) comprises a plurality of first pocket-shaped receptacles (100, 102, 104, 106), which are each arranged in alignment in the axial direction with a second pocket-shaped receptacle (116, 118, 120, 122) positioned on the motor pump unit (38), with the interposition of a first vibration-damping buffer element (80), wherein each first vibration-damping buffer element (80) comprises two axially opposing end portions (108, 124), which are each accommodated by one of the first and second receptacles, preferably **in that** the second pocket-shaped receptacles (116, 118, 120, 122) are arranged distributed over the circumference of the motor pump unit (38).

4. High pressure cleaning appliance in accordance with any one of the preceding Claims, **characterized in that** the first and second pocket-shaped receptacles (100, 102, 104, 106, 116, 118, 120, 122) each extend along the periphery of an axial end portion (108, 124) of a first vibration-damping buffer element (80) and abut against an end face (112, 130) of the axial end portion (108, 124).

5. High pressure cleaning appliance in accordance with any one of the preceding Claims, **characterized in that** the first holding device (76) forms a holding ring (84), which surrounds the motor pump unit (38) in the circumferential direction while forming an annular gap (86), preferably **in that** the holding ring (84) comprises two diametrically opposed radial expansion portions (174, 176), which each dip into an inside housing receptacle (170, 172) of the appliance housing (12), in particular **in that** the expansion portions (174, 176) each form a positive engagement with a housing receptacle (170, 172) and/or **in that** the expansion portions (174, 176) are each releasably connected to a housing receptacle (170, 172) by means of connecting elements.

6. High pressure cleaning appliance in accordance with Claim 5, **characterized in that** the holding ring (84) comprises two half-rings (88, 90), which each comprise at least one first pocket-shaped receptacle (100, 102, 104, 106), preferably **in that** the half-rings (88, 90) are releasably connected to one another and/or **in that** each of the two half-rings (88, 90) is releasably connected to the appliance housing (12).

7. High pressure cleaning appliance in accordance with any one of the preceding Claims, **characterized in that** the second holding device (78) comprises a plurality of third pocket-shaped receptacles (148, 150, 152, 154), which are each arranged in alignment in the axial direction with a fourth pocket-shaped receptacle (162, 164) positioned on the motor pump unit (38), with the interposition of a second vibration-damping buffer element (82), wherein each second vibration-damping buffer element (82) comprises axially opposing end portions (156, 166), which are each accommodated by one of the third and fourth receptacles, preferably **in that** the third and fourth pocket-shaped receptacles each extend along the periphery of an axial end portion (156, 166) of a second vibration-damping buffer element (82) and abut against an end face (158, 168) of the axial end portion (156, 166).

8. High pressure cleaning appliance in accordance with any one of the preceding Claims, **characterized in that** the second holding device (78) forms a support member (132) on which the motor pump unit (38) sits during the operation of the high pressure cleaning appliance (10).

9. High pressure cleaning appliance in accordance with Claim 8, **characterized in that** the at least one fourth pocket-shaped receptacle (162, 164) is arranged on an outside of a base wall (160) of the motor pump unit (38).

10. High pressure cleaning appliance in accordance with Claim 8 or 9, **characterized in that** the support member (132) comprises a support body (144), on whose top side (146) pointing toward the motor pump unit (38) the at least one third pocket-shaped receptacle (148, 150, 152, 154) is arranged.

11. High pressure cleaning appliance in accordance with Claim 10, **characterized in that** the support body (144) is of rotationally symmetrical configuration with respect to the longitudinal axis (140) of the motor pump unit (38) and/or **in that** the support member (132) comprises a base part (134) on which the support body (144) is arranged and which dips into a holder arranged inside on a base wall (138) of the appliance housing (12).

12. High pressure cleaning appliance in accordance with any one of the preceding Claims, **characterized in that** at least one of the following applies:
- the first and second buffer elements (80, 82) are of identical configuration;
- the first and second buffer elements (80, 82) are of plate-shaped configuration;
- the first and second buffer elements (80, 82) consist of a microcellular polyurethane elastomer.

13. High pressure cleaning appliance in accordance with any one of the preceding Claims, **characterized in that** the motor pump unit (38) comprises a first and a second motor housing part (50, 52), which are connected to one another by way of two connecting flanges, wherein the at least one second pocket-shaped receptacle (116, 118, 120, 122) is arranged on one of the two connecting flanges (58).

14. High pressure cleaning appliance in accordance with any one of the preceding Claims, **characterized in that** the pump (42) comprises a pump outlet (70), which is connected by way of a flexible hose conduit (72) to a liquid outlet part (74) held on the appliance housing (12).

## Revendications

1. Appareil de nettoyage haute pression, comprenant une enveloppe d'équipement (12) qui entoure une unité de motopompe (38) comprenant un moteur (40) et une pompe (42) entraînée par ledit moteur, dans lequel l'unité de motopompe (38) est retenue sur l'enveloppe d'équipement (12) par l'intermédiaire d'éléments tampons amortisseurs de vibrations (80, 82), dans lequel
l'appareil de nettoyage haute pression (10) présente des premier et second dispositifs de retenue (76, 78) qui sont fixés sur l'enveloppe d'équipement (12), **caractérisé en ce que** le premier dispositif de retenue présente au moins un premier logement en forme de poche (100, 102, 104, 106) qui est agencé en alignement dans la direction axiale par rapport à un deuxième logement en forme de poche (116, 118, 120, 122) positionné sur l'unité de motopompe (38) avec interposition d'un premier élément tampon amortisseur de vibrations (80), dans lequel le premier élément tampon amortisseur de vibrations (80) présente deux sections d'extrémité (108, 124) axialement opposées qui sont respectivement accueillies par un parmi les premier et deuxième logements en forme de poche, et dans lequel le premier élément tampon amortisseur de vibrations (80) est maintenu en place dans la direction axiale et dans la direction radiale au moyen des premier et deuxième logements, et dans lequel le second dispositif de retenue (78) présente au moins un troisième logement en forme de poche (148, 150, 152, 154) qui est agencé en alignement dans la direction axiale par rapport à un quatrième logement en forme de poche (162, 164) positionné sur l'unité de motopompe (38) avec interposition d'un second élément tampon amortisseur de vibrations (82), dans lequel le second élément tampon amortisseur de vibrations (82) présente deux sections d'extrémité (156, 166) axialement opposées qui sont respectivement accueillies par un parmi les troisième et quatrième logements, et dans lequel le second élément tampon amortisseur de vibrations est maintenu en place dans la direction axiale et dans la direction radiale au moyen des troisième et quatrième logements.

2. Appareil de nettoyage haute pression selon la revendication 1, **caractérisé en ce que** les premier et second dispositifs de retenue (76, 78) sont agencés à une distance axiale l'un de l'autre par rapport à un axe longitudinal (140) de l'unité de motopompe (38).

3. Appareil de nettoyage haute pression selon la revendication 1 ou 2, **caractérisé en ce que** le premier dispositif de retenue (76) présente plusieurs premiers logements en forme de poche (100, 102, 104, 106), qui sont agencés respectivement en alignement dans la direction axiale par rapport à un deuxième logement en forme de poche (116, 118, 120, 122) positionné sur l'unité de motopompe (38) avec interposition d'un premier élément tampon amortisseur de vibrations (80), dans lequel chaque premier élément tampon amortisseur de vibrations (80) présente deux sections d'extrémité (108, 124) axialement opposées qui sont respectivement accueillies par un parmi les premier et deuxième logements, de manière préférée **en ce que** les deuxièmes logements en forme de poche (116, 118, 120, 122) sont répartis sur la circonférence de l'unité de motopompe (38).

4. Appareil de nettoyage haute pression selon l'une quelconque des revendications précédentes, **caractérisé en ce que** les premier et deuxième logements en forme de poche (100, 102, 104, 106, 116, 118, 120, 122) s'étendent respectivement le long de la circonférence d'une section d'extrémité axiale (108, 124) d'un premier élément tampon amortisseur de vibrations (80) et reposent contre une surface d'extrémité (112, 130) de la section d'extrémité axiale (108, 124).

5. Appareil de nettoyage haute pression selon l'une quelconque des revendications précédentes, **caractérisé en ce que** le premier dispositif de retenue (76) forme une bague de retenue (84) qui entoure l'unité de motopompe (38) dans la direction circonférentielle en formant une fente annulaire (86), de manière préférée **en ce que** la bague de retenue (84) présente deux sections d'extension (174, 176) radiales, diamétralement opposées l'une à l'autre, qui plongent respectivement dans un logement d'enveloppe (170, 172), situé du côté intérieur, de l'enveloppe d'équipement (12), en particulier **en ce que** les sections d'extension (174, 176) créent respectivement un verrouillage par complémentarité de forme avec un logement d'enveloppe (170, 172) et/ou **en ce que** les sections d'extension (174, 176) sont respectivement reliées de manière amovible à un logement d'enveloppe (170, 172) au moyen d'éléments de liaison.

6. Appareil de nettoyage haute pression selon la revendication 5, **caractérisé en ce que** la bague de retenue (84) présente deux demi-anneaux (88, 90) qui présentent respectivement au moins un premier logement en forme de poche (100, 102, 104, 106), de manière préférée **en ce que** les demi-anneaux (88, 90) sont reliés de manière amovible l'un à l'autre et/ou **en ce que** chacun des deux demi-anneaux (88, 90) est relié de manière amovible à l'enveloppe d'équipement (12).

7. Appareil de nettoyage haute pression selon l'une quelconque des revendications précédentes, **caractérisé en ce que** le second dispositif de retenue (78) présente plusieurs troisièmes logements en forme de poche (148, 150, 152, 154) qui sont agencés respectivement en alignement dans la direction axiale par rapport à un quatrième logement en forme de poche (162, 164) positionné sur l'unité de motopompe (38) avec interposition d'un second élément tampon amortisseur de vibrations (82), dans lequel chaque second élément tampon amortisseur de vibrations (82) présente des sections d'extrémité (156, 166) axialement opposées qui sont respectivement accueillies par un parmi les troisième et quatrième logements, de manière préférée **en ce que** les troisième et quatrième logements en forme de poche s'étendent respectivement le long de la circonférence d'une section d'extrémité axiale (156, 166) d'un second élément tampon amortisseur de vibrations (82) et reposent contre une surface d'extrémité (158, 168) de la section d'extrémité axiale (156, 166).

8. Appareil de nettoyage haute pression selon l'une quelconque des revendications précédentes, **caractérisé en ce que** le second dispositif de retenue (78) forme un élément d'appui (132) sur lequel l'unité de motopompe (38) repose pendant le fonctionnement de l'appareil de nettoyage haute pression (10).

9. Appareil de nettoyage haute pression selon la revendication 8, **caractérisé en ce que** le au moins un quatrième logement en forme de poche (162, 164) est agencé sur un côté extérieur d'une paroi de fond (160) de l'unité de motopompe (38).

10. Appareil de nettoyage haute pression selon la revendication 8 ou 9, **caractérisé en ce que** l'élément d'appui (132) présente un corps d'appui (144) sur la face supérieure (146), tournée vers l'unité de motopompe (38), duquel est agencé le au moins un troisième logement en forme de poche (148, 150, 152, 154).

11. Appareil de nettoyage haute pression selon la revendication 10, **caractérisé en ce que** le corps d'appui (144) est conçu de manière à présenter une symétrie de rotation par rapport à l'axe longitudinal (140) de l'unité de motopompe (38) et/ou **en ce que** l'élément d'appui (132) présente une partie formant base (134) sur laquelle est agencé le corps d'appui (144) et qui plonge dans un support agencé, du côté intérieur, au niveau d'une paroi de fond (138) de l'enveloppe d'équipement (12).

12. Appareil de nettoyage haute pression selon l'une quelconque des revendications précédentes, **caractérisé par** au moins un des éléments ci-dessous :
- les premier et second éléments tampons (80, 82) sont conçus de manière identique ;
- les premier et second éléments tampons (80, 82) sont conçus en forme de plaque ;
- les premier et second éléments tampons (80, 82) sont en élastomère de polyuréthane microcellulaire.

13. Appareil de nettoyage haute pression selon l'une quelconque des revendications précédentes, **caractérisé en ce que** l'unité de motopompe (38) présente des première et seconde parties de carter de moteur (50, 52) reliées l'une à l'autre par deux brides de liaison, dans lequel le au moins un deuxième logement en forme de poche (116, 118, 120, 122) est agencé sur l'une des deux brides de liaison (58).

14. Appareil de nettoyage haute pression selon l'une quelconque des revendications précédentes, **caractérisé en ce que** la pompe (42) présente une sortie de pompe (70) reliée par une conduite flexible (72) à un élément de sortie de liquide (74) retenu sur l'enveloppe d'équipement (12).
